# FASCICULE DE BREVET EUROPEEN

(11) **EP 1 358 131 B1**
(45) Date de publication et mention de la délivrance du brevet: **19.07.2006**
(21) Numéro de dépôt: 02703662.3
(22) Date de dépôt: 06.02.2002
(51) Int. Cl.: C03B 23/035, C03B 23/025, C03B 23/03, C03B 35/20

(54) **PROCEDE ET DISPOSITIF POUR CINTRER DES VITRES PAR PAIRES**
VERFAHREN UND VORRICHTUNG ZUM PAARWEISEN BIEGEN VON ZWEI GLASSCHEIBEN
METHOD AND DEVICE FOR BENDING GLASS PANES IN PAIRS

(30) Priorité: 06.02.2001 DE 10105200
(43) Date de publication de la demande: 05.11.2003
(73) Titulaire: SAINT-GOBAIN GLASS FRANCE, 92400 Courbevoie (FR)
(72) Inventeur: BALDUIN, Michael, 52477 Alsdorf (DE); LABROT, Michael, 52072 Aachen (DE); HAVENITH, Hubert, 52146 Würselen (DE)
(74) Mandataire: Colombier, Christian
(86) Numéro de dépôt international: PCT/FR2002/000455
(87) Numéro de publication internationale: WO 2002/064519

(56) Documents cités:
- EP-A- 0 363 097
- EP-A- 0 531 152
- US-A- 3 778 244
- US-A- 5 660 609
- US-A- 5 893 941
- US-A- 5 992 178
- PATENT ABSTRACTS OF JAPAN vol. 006, no. 244 (C-138), 2 décembre 1982 (1982-12-02) & JP 57 145041 A (ASAHI GLASS KK), 7 septembre 1982 (1982-09-07)

## Description

L'invention concerne un procédé pour cintrer des vitres par paires, dans lequel la paire de vitres est précintrée en position horizontale sur un cadre de cintrage sous l'effet de la force de la gravité et est ensuite cintrée à l'aide d'un moule de cintrage plein agissant sur la paire de vitres précintrée. Elle se rapporte aussi à un dispositif particulièrement approprié pour la mise en oeuvre de ce procédé. Des vitres cintrées par paires sont ensuite principalement, mais pas exclusivement, façonnées en pare-brise en verre feuilleté pour des véhicules.

Le document DE-C1-43 37 559 décrit un procédé pertinent, dans lequel les paires de vitres précintrées sur un cadre de cintrage sont appliquées par le bas sur un moule de cintrage supérieur plein. Ce dernier est entouré à son bord par une jupe, qui forme une fente annulaire avec le bord extérieur du moule de cintrage supérieur. Après l'application des vitres chauffées sur le moule de cintrage supérieur au moyen du cadre de cintrage, l'air est aspiré à grande vitesse de circulation à travers ladite fente annulaire. De ce fait, les deux vitres s'appliquent par toute leur surface sur le moule de cintrage supérieur. Elles acquièrent ensemble leur configuration sphérique définitive. La circulation de l'air dans la fente annulaire doit aussi faire disparaître d'éventuelles inclusions d'air entre les deux vitres.

Par le document EP-A2-0 531 152, on connaît un autre procédé pertinent. Ainsi, après leur précintrage par paires sur le cadre de cintrage, les vitres sont soulevées de ce dernier et transférées ensemble sur un moule inférieur de cintrage par pressage. Lors du cintrage, les vitres sont également cintrées à leur forme définitive par un pressage mécanique sur un moule supérieur plein. Un tel procédé peut conduire à des défauts optiques sur les faces des vitres, parce que les efforts de pressage doivent nécessairement être transmis d'une vitre à l'autre.

Par le document EP-B1-0 705 798, on connaît un procédé pour le cintrage sur cadre d'une ou de vitres superposées par paires sous l'effet de la force de la gravité, dans lequel la/les vitre(s) déposée(s) sur un cadre de précintrage rigide s'adaptent, par l'effet de la force de la gravité, au profil de ce cadre de cintrage. Dans une seconde étape ultérieure de cintrage, les vitres à cintrer sont transférées du cadre de précintrage extérieur à un cadre de cintrage final mobile, situé à l'intérieur, qui peut être commandé de façon purement mécanique.

Les procédés connus ne sont pas exempts d'inconvénients. Si l'on utilise pour le cintrage final uniquement un cadre de cintrage comme moule de cintrage inférieur, alors on ne peut empêcher que les vitres conservent, dans la zone centrale à l'intérieur de la région de bord, une flèche plus grande provoquée par le cintrage dû à la force de la gravité pendant la phase de précintrage. Si, pour éviter cet inconvénient, on utilise comme moule inférieur de cintrage par pressage un moule de cintrage plein, il peut alors apparaître des déformations optiques dans les vitres, qui sont dues au fait que le premier contact dans la région de la plus grande flèche conduit à des déformations de faible étendue, qui ne peuvent pas être complètement éliminées même lors de l'opération de pressage ultérieure. Par ailleurs, les procédés connus de cette nature, travaillant avec des presses mécaniques, sont en règle générale grevés de coûts de construction élevés.

La DE-A1-21 19 699 divulgue un moule de cintrage par aspiration avec une face de formage concave. Par moule de cintrage par aspiration, il faut comprendre un dispositif, par exemple en forme de caisson, dont le côté ou la face de formage est formé par un contour de cintrage à surface pleine. Cette face de formage - ici concave - est la plupart du temps pourvue d'une pluralité de trous, d'une façon connue en soi. A l'intérieur du caisson se trouvent des canaux et des espaces creux communiquant avec les trous. Ceux-ci peuvent être raccordés, par des conduites d'aspiration appropriées, à un générateur de dépression, respectivement à un réservoir sous vide. Des soupapes actionnables dans les conduites permettent une mise sous vide brusque desdits canaux et espaces creux. Par conséquent, l'air est aspiré par les trous depuis la face extérieure du moule de cintrage par aspiration, donnant lieu par endroits à de très grandes différences de pression et vitesses d'écoulement. Suivant le document précité, on laisse tomber sur le moule inférieur concave de cintrage par aspiration une vitre précintrée sur un moule supérieur plein de cintrage par aspiration. Les bords de celle-ci viennent les premiers en contact avec le moule inférieur. La vitre s'affaisse sur celui-ci d'une part sous l'effet de la force de la gravité, mais elle est d'autre part aussi pressée contre la face de formage par la différence de pression entre la pression atmosphérique et la dépression créée dans le moule inférieur.

Ce procédé est certes recommandé pour le cintrage simultané de deux vitres ou plus, même pour de forts cintrages, le transfert d'une paire de vitres du moule supérieur convexe au moule inférieur concave n'étant cependant pas décrit. En outre, dans ce procédé, les deux faces principales des vitres viennent forcément en contact avec les faces des moules.

Le document US-4.894.080 décrit un autre procédé de cintrage par paires de vitres qui sont précintrées sous l'effet de la force de gravité sur un moule de précintrage en forme de cadre, éventuellement réalisé de manière divisée de façon mobile. Un moule de cintrage plein de face de formage concave est soulevé par le bas par le moule de précintrage en forme de cadre, après que celui-ci a été positionné, et prend la paire de vitres. A l'aide d'un autre moule de cintrage en forme de boîte, de face de formage en forme de cadre, le bord de la paire de vitres est pressé sur la face de formage concave, tandis qu'à l'intérieur de la boîte une surpression est constituée, sous l'effet de laquelle la paire de vitres est pressée à plat contre la face de formage concave. Au bout d'un certain temps, la surpression est à nouveau enlevée. La paire de vitres est à nouveau placée sur le moule de précintrage en forme de cadre et, en place sur celui-ci, est enlevée du poste de cintrage en vue de son refroidissement.

Le EP-B1-0 530 211 décrit un dispositif pour le cintrage de vitres individuelles, qui comprend un moule inférieur concave plein de cintrage (par aspiration), sur lequel sont déposées des vitres chauffées à la température de ramollissement. Un cadre de cintrage supérieur avec une surface convexe complémentaire est alors abaissé sur l'arête de la vitre, pour presser les bords de celle-ci sur le bord du moule de cintrage inférieur. Finalement, l'air entre le moule de cintrage inférieur et la vitre est aspiré par application d'impulsions de dépression au caisson de formage, la charge appliquée sur le bord par le cadre de cintrage assurant l'étanchéité vers l'extérieur. La vitre est mise en contact sur toute la surface avec le moule de cintrage inférieur et elle acquiert ainsi sa configuration cintrée sphérique définitive. Dans le dernier document cité, il n'est pas question du cintrage de vitres par paires.

Encore un autre procédé connu (DE-C1-197 25 189) pour le cintrage de vitres avec transfert de vitres individuelles entre différents moules de précintrage et de cintrage par aspiration et un dispositif de transport fait usage d'un cadre de cintrage divisé en segments. Ces segments peuvent être écartés les uns des autres, pour faire passer d'un convoyeur un moule de cintrage (par aspiration) convexe plein destiné à recevoir la vitre qui n'est pas encore cintrée. Après que la vitre ait été soulevée du convoyeur avec le moule de cintrage, les segments sont à nouveau réunis en un cadre de formage fermé qui, comme moule inférieur de cintrage par pressage, presse les bords de la vitre sur le moule plein.

Un avantage des moules concaves par aspiration concaves est que la vitre est cintrée dans la face de la vitre par aspiration sans contact mécanique avec le moule. De ce fait, des empreintes du tissu du moule sur la surface du verre sont largement évitées. Ceci influence positivement les propriétés optiques (transmission).

Finalement, on connaît, par le document EP-B1-448 447 un procédé de cintrage de vitres individuelles ou de plusieurs vitres simultanément, dans lequel la vitre (inférieure) est tout d'abord placée le long d'une première ligne périphérique sur un premier moule de préformage en forme de cadre, et est affaissée dans un contour de précintrage - cintrage transversal- sous l'effet de la force de gravité. Ensuite, la vitre inférieure est maintenue le long d'une deuxième ligne périphérique de cintrage, qui s'étend à la place de la première ligne périphérique, pour créer le contour de cintrage final - cintrage longitudinal. A cet effet, un deuxième moule de cintrage en forme de cadre est placé à la place du moule de précintrage, celui-ci, en fonction de la réalisation, ne venant en contact qu'avec une périphérie partielle de la surface de verre. Dans ce cas également, les vitres ne sont cintrées que sous l'effet de la force de gravité, le transfert du moule de précintrage au deuxième moule de cintrage s'effectuant relativement rapidement. Les deux lignes périphériques sur lesquelles la face de vitre inférieure en appui vient en contact avec les deux moules de cintrage agissant l'un après l'autre, sont différentes, parce que les faces d'appui agissant l'une après l'autre sont emboîtées l'une dans l'autre, respectivement s'étendent parallèlement l'une à l'autre dans une projection perpendiculaire.

L'invention a pour objet d'indiquer un procédé supplémentaire pour le cintrage de vitres par paires ainsi qu'un dispositif convenant pour sa mise en oeuvre.

Conformément à l'invention, cet objectif est atteint par les caractéristiques de la revendication 1 en ce qui concerne le procédé. Les caractéristiques de la revendication 9 indiquent un dispositif correspondant. Les caractéristiques des revendications secondaires respectivement subordonnées aux revendications indépendantes révèlent des perfectionnements avantageux de ces objets.

Entre deux vitres précintrées par paires sur un cadre par la force de la gravité sont en règle générale enfermés tout au plus des volumes d'air minimaux pour des fentes marginales minimales. Le procédé conforme à l'invention exploite à présent l'effet selon lequel, lors d'une rapide diminution de la pression même uniquement entre la face inférieure de la vitre placée en position inférieure et la face de formage d'un moule concave de cintrage par aspiration, l'air peut tout au plus pénétrer lentement entre les deux vitres.

De manière surprenante, une différence de pression produite de façon suffisamment rapide entre ladite face inférieure et la face supérieure de la seconde vitre posée uniquement librement suffit pour presser les deux vitres en même temps sur la face de formage. Naturellement, la force de la gravité renforce de toute manière cette direction de mouvement. Dans tous les cas, il ne faut pas nécessairement une action mécanique sur la face de la vitre placée en position supérieure.

Il est avantageux en l'occurrence que la face de séparation des deux vitres soit, de façon connue en soi, garnie au préalable d'un moyen de séparation. On évite ainsi les dommages réciproques des deux faces ramollies des vitres, qui pourraient survenir à cause de mouvements relatifs inévitables pendant l'opération commune de formage.

Avec ce procédé, les vitres acquièrent une précision de forme élevée, comparable à celle des procédés usuels de cintrage à la presse, aussi bien dans la région des bords que dans la zone centrale. De même, des déformations optiques sont pratiquement évitées sur toute la surface. En utilisant un moule concave plein suivant l'invention, le verre est étendu au milieu de la vitre, tandis que lors du cintrage sur des moules convexes, on effectue le cintrage à partir du milieu, ce qui peut conduire à des refoulements et à des ondulations aux bords des vitres.

En cas d'exigences de déformation particulièrement sévères, en particulier pour la fabrication de formes de vitres complexes à cintrage sphérique et en cas de précintrage important, l'adaptation de la face inférieure de la vitre au bord périphérique du moule concave de cintrage par aspiration par la seule action de la force de la gravité ne suffira d'une part pas pour rendre étanche vers l'extérieur l'espace entre la face inférieure de la vitre et la face de cintrage. En outre, il peut apparaître avec ces conditions de bord des fentes entre les bords des deux vitres posées l'une sur l'autre. De l'air pourrait pénétrer dans de telles fentes, lorsque seule la face de la vitre placée en position inférieure est soumise à une dépression lors de l'opération de cintrage, respectivement l'étape principale de cintrage qui suit.

Dans ces conditions difficiles, il peut s'avérer nécessaire de presser mécaniquement, d'une façon connue en soi, les bords des deux vitres sur le bord du moule concave de cintrage par aspiration. D'une part, l'espace à mettre en dépression est ainsi suffisamment bien rendu étanche vers l'extérieur. D'autre part, les bords des deux vitres sont pressés de façon fiable l'un sur l'autre, de sorte qu'il ne peut pas pénétrer d'air entre eux pendant l'opération de cintrage. A cet effet, la face supérieure de la vitre placée en position supérieure est mise en contact avec un moule supérieur, soit par abaissement du moule supérieur sur la surface du verre soit par soulèvement du moule inférieur concave. On utilisera de préférence comme moule supérieur un cadre de cintrage complémentaire au bord du moule inférieur, afin de maintenir aussi peu étendue que possible l'action mécanique sur la face supérieure de la vitre. Des défauts optiques inévitables au bord de la vitre peuvent être masqués sous le bandeau coloré opaque habituellement prévu sur les pare-brise.

De préférence, on ne laissera agir l'étanchéité mécanique que très peu de temps, tandis que la différence de pression entre la face de formage, c'est-à-dire la face inférieure de la paire de vitres d'une part et sa face supérieure d'autre part est maintenue plus longtemps, pour atteindre en toute certitude la forme de vitre (complexe) désirée. De cette manière, des défauts de surface dus au contact mécanique sont largement réduits sur la vitre placée en position supérieure.

Dans cette variante, on évite cependant aussi complètement de charger la vitre placée en position inférieure mécaniquement sur sa face (de vision) à travers la vitre supérieure.

Des essais ont déjà montré que ce procédé pouvait être mis en oeuvre à des températures plus basses que des procédés comparables. Ceci conduit aux avantages que même des vitres revêtues peuvent être cintrées, sans devoir porter les systèmes de couches résistant à la chaleur à la limite de leur tolérance de température. Il est connu que de telles vitres de grande étendue sont pourvues essentiellement de systèmes de couches réfléchissant les rayonnements infrarouges mais cependant hautement transparentes au point de vue optique, afin de réduire de façon significative le rayonnement thermique dans l'habitacle des véhicules. Certes, de nombreux systèmes de couches supportent déjà des températures allant jusque 650°C, néanmoins toute réduction de la température maximale à supporter lors du cintrage des vitres revêtues abaisse le risque de dommages au revêtement.

La paire de vitres peut en principe être transférée du cadre de précintrage au moule concave plein de cintrage par aspiration par un dispositif de transfert séparé. On peut aussi utiliser ledit cadre de formage lui-même comme moyen de transport, pour déposer les vitres sur le moule inférieur plein. Si le moule plein est un peu plus petit que les faces des vitres, on peut alors opérer directement le transfert en un mouvement relatif entre le cadre de formage et le moule plein. Dans ce cas, le moule plein passe à travers le cadre de formage, qui ne supporte les vitres que le long de leur bord extérieur, et il vient en contact avec la face inférieure de la vitre placée en position inférieure. Le bord de celle-ci déborde légèrement au-delà du contour de la face de formage. On peut ici aussi diviser le cadre de précintrage en segments de la manière déjà mentionnée, le cas échéant suivant une variante appropriée, pour optimiser le transfert du moule de précintrage au moule de cintrage par aspiration.

Etant donné que la vitre placée en position supérieure repose entièrement et à plat sur la vitre placée en position inférieure, elle peut en principe être taillée, tout autour ou suivant certaines arêtes, à une grandeur un peu plus petite que la vitre placée en position inférieure. En cas de cintrages importants, ceci présente l'avantage que cette vitre intérieure plus fortement cintrée ne déborde pas au-delà du bord de la vitre extérieure, même après le cintrage, comme cela est le cas pour des vitres de taille exactement égale. On obtient alors un bord extérieur relativement plus net de la vitre feuilletée terminée.

Il est intéressant de prévoir un dispositif de transport correspondant aussi exactement que possible à la forme des vitres, pour le transfert de la paire de vitres cintrée terminée depuis le moule concave plein jusqu'au poste de refroidissement. Le cadre de précintrage ne s'y prête en règle générale pas, parce que la forme des vitres cintrées terminées diffère sensiblement de la forme simplement précintrée. Dans une mise en oeuvre préférée, ce dispositif de transport a également la forme d'un cadre, et il est disposé pratiquement en position coaxiale aussi bien par rapport au cadre de précintrage que par rapport au moule concave plein. Le gain de place réalisable - tout le poste de cintrage est ainsi très compact - peut tout au plus nécessiter des pièces mobiles sur le cadre de précintrage et/ou le cadre de transport pour les vitres terminées. Ainsi, le dispositif de transport peut aussi, le cas échéant, se subdiviser en segments, à nouveau de la façon connue en soi, pour assurer une utilisation optimale de l'espace. Pour exécuter le procédé de cintrage au sens strict, ces mesures sont néanmoins d'une importance secondaire.

Dans une variante particulièrement avantageuse du procédé, la paire de vitres précintrée est d'abord transférée du cadre de précintrage sur un autre moule de cintrage en forme de cadre, dont les faces d'appui ont déjà le contour des vitres cintrées à l'état fini. Cependant, ce moule de cintrage supplémentaire doit essentiellement encore être considéré comme un moule de précintrage, car la mise en forme finale des vitres a lieu au niveau de la face sur le moule concave de cintrage par aspiration. Le transfert s'effectue suffisamment rapidement pour cintrer les vitres placées sur ce moule supplémentaire encore une fois sous l'effet de la force de gravité. Elles s'approchent en l'occurrence déjà dans chaque cas du moule final au niveau de leurs bords. Ceci présente l'avantage qu'après le transfert au moule plein concave (et éventuellement après la mise en place du moule supérieur), on peut commencer immédiatement l'aspiration de la ou des vitres et que l'on ne doit pas encore s'attendre à une adaptation de la vitre au moule plein le long des bords, et que l'on peut le cas échéant même renoncer complètement à l'utilisation d'un moule supérieur. Des fentes marginales possibles entre la face des vitres et le moule plein sont limitées à un minimum si les arêtes des vitres ont pratiquement déjà été marquées avec leur contour final.

On adapte en outre la forme et les faces d'appui des deux cadres de cintrage l'une avec l'autre de telle sorte que les deux faces d'appui ne touchent la surface de la vitre qu'aussi près que possible de son bord, de préférence sur une bande étroite de 10 mm au maximum, éventuellement même d'une largeur de seulement 6 à 7 mm. Ceci est possible selon un perfectionnement avantageux lorsque les deux cadres de cintrage ou leurs faces d'appui se recouvrent dans une projection verticale (le "retrait" des vitres visible au niveau des bords s'ajustant de manière correspondante avec une profondeur de cintrage croissante devant encore être pris en compte), mais se trouvent toutefois à des positions en hauteur différentes. Un avantage particulier de cette réalisation des deux cadres de cintrage est que les marques ou marquages laissés inévitablement par les faces d'appui sur la surface de la vitre en contact ne se trouvent que le long de leurs zones marginales les plus extérieures. Ainsi, on obtient une amélioration optique supplémentaire par rapport aux procédés de cintrage connus à deux anneaux.

D'autres détails et avantages de l'objet de l'invention seront fournis par la représentation illustrée de différentes étapes, respectivement phases de l'exécution du procédé, respectivement des étapes de cintrage dans un dispositif correspondant et par sa description détaillée qui suit ci-dessous.

Dans une représentation de principe simplifiée, la
- Fig. 1: illustre l'opération de précintrage; la
- Fig. 2: montre le transfert de la paire de vitres sur le moule concave plein de cintrage par aspiration; la
- Fig. 3: représente l'étanchéité du bord de la paire de vitres au moyen d'un moule supérieur; la
- Fig. 4: montre le commencement de l'exposition à la dépression; la

- Fig. 5: illustre l'enlèvement du moule supérieur, avec le maintien simultané de l'exposition à la dépression à travers le moule de cintrage par aspiration; et la
- Fig. 6: montre le transfert de la paire de vitres cintrée terminée sur un dispositif de transport,
- Fig. 7: montre une élévation verticale d'une unité de deux moules de cintrage en forme de cadre différents,
- Fig.7a: illustre un détail de la figure 7 dans la zone de vision indiquée par des flèches, avec une section d'un moule concave de cintrage par aspiration et d'une paire de vitres précintrées.

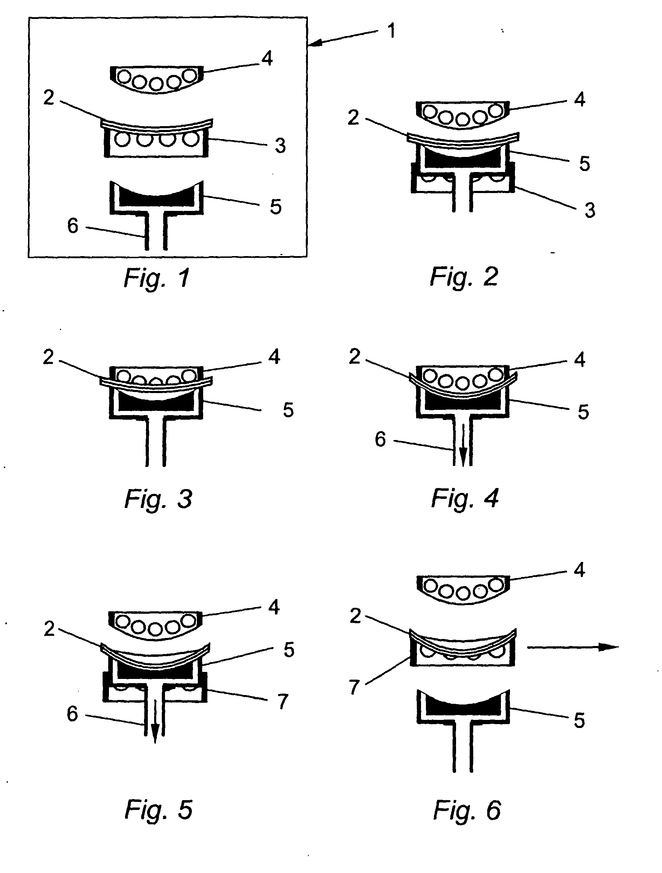

La **figure 1** montre, à l'intérieur d'un poste de cintrage simplement indiqué 1, une paire de vitres 2 qui a été déposée sur un moule de précintrage 3 en forme de cadre. D'une manière générale, ce moule de précintrage peut déjà être utilisé pour le transport des vitres déposées pendant le chauffage des vitres à leur température de ramollissement dans un four non représenté, qui peut être une partie du dispositif. Le transfert est cependant également possible d'une autre façon, avec d'autres moyens connus en soi. Le traitement de cintrage par paires des deux vitres commence toujours par l'étape commune de précintrage, qui est exécutée sous l'action de la force de la gravité sur le moule de précintrage 3. Ce précintrage est déjà effectué dans la phase illustrée dans la figure 1.

Au-dessus du moule de précintrage 3 se trouve un moule supérieur convexe 4, qui a également la forme d'un cadre. Le contour de sa face de formage est un peu plus petit que le contour délimité par le moule de précintrage. La fonction du moule supérieur 4 sera encore expliquée plus tard. Dans certaines conditions, sur lesquelles on reviendra également, le moule supérieur 4 ne doit cependant pas nécessairement être utilisé pour le procédé décrit ici.

En dessous du moule de précintrage 3 se trouve un moule concave de cintrage par aspiration 5 avec un canal d'aspiration 6. Le contour de formage du moule supérieur 4 est complémentaire à la face de formage du moule de cintrage par aspiration 5. Dans la réalisation illustrée ici, ce dernier est mobile en hauteur dans la direction de la force de la gravité au moyen d'un dispositif de commande non représenté. Son périmètre est configuré de façon à pouvoir, lors du soulèvement, être mené à travers l'espace délimité par le moule de précintrage avec un léger interstice libre sur tous les côtés et à pouvoir recevoir la paire de vitres 2 sur sa face de formage. La face de formage du moule de cintrage par aspiration 5 peut être légèrement en retrait par rapport au bord extérieur des vitres.

Naturellement l'opération de transfert pourrait également être représentée de façon inverse, en abaissant le moule de précintrage 3 vers, respectivement sur le moule de cintrage par aspiration 5, de sorte que le moule de cintrage par aspiration 5 plonge dans celui-ci. Le cas échéant, des segments d'un moule de précintrage divisé sont écartés les uns des autres pour cette opération de transfert.

Il va de soi que toutes les faces de formage, qui viennent en contact avec le verre, sont de façon usuelle revêtues d'un tissu à fond lisse ou à mailles résistant à la chaleur, qui réduit en outre le risque de dommages dus au contact mécanique.

Le passage de l'étape de précintrage à l'étape principale de cintrage de l'opération de cintrage est montré dans la **figure 2**. Le bord de la vitre placée en position inférieure repose déjà sur le bord périphérique du moule de cintrage par aspiration 5 soulevé, mais il dépasse légèrement au-delà du périmètre du moule de cintrage par aspiration 5. La vitre supérieure de la paire de vitres précintrée 2 n'a jusqu'à présent pas le moindre contact avec les moules de cintrage.

Il faut parfois réaliser de grands rayons de courbure, respectivement de petits angles de tangente (il s'agit des angles entre le plan initial de la vitre plane non déformée et la tangente aux régions de bord respectives de la vitre cintrée terminée) dans la région du bord des vitres. Alors, l'action de la force de la gravité peut déjà à elle seule provoquer une bonne adaptation du bord de la vitre au bord périphérique de la face de cintrage lors du dépôt des vitres simplement légèrement précintrées sur le moule de cintrage par aspiration. Par conséquent, l'espace restant libre entre la face inférieure de la vitre inférieure et la face de cintrage est à présent déjà pratiquement étanche vers l'extérieur. Même entre les bords des deux vitres, il se forme dans de tels cas tout au plus des fentes d'air négligeables. On peut à présent déjà appliquer la dépression au moule de cintrage par aspiration, pour presser les deux vitres de la paire de vitres 2 en même temps contre la face de cintrage. Il ne serait pas nécessaire d'utiliser le moule supérieur 4.

Celui-ci est cependant utilisé - comme le montre la **figure 3** dans une phase ultérieure - lorsque, par suite d'une forme de cintrage complexe des vitres terminées (petits rayons, respectivement grands angles de tangente au bord) une adaptation de la face inférieure des vitres sur le bord périphérique du moule de cintrage par aspiration 5 ne peut pas être obtenue par la seule force de la gravité lors de l'opération de transfert. Ici, le moule de cintrage par aspiration 5 est à nouveau soulevé jusqu'à ce que la face de formage complémentaire du moule supérieur 4 vienne' en contact avec la face supérieure de la vitre placée en position supérieure. Bien entendu, on pourrait aussi bien abaisser le moule supérieur 4 sur le moule de cintrage par aspiration 5. Dans les deux cas, la paire de vitres 2 est pressée par les bords sur la face de formage du moule de cintrage par aspiration.

Si l'étanchéité du bord est assurée de cette manière entre la face inférieure de la vitre placée en position inférieure et le bord périphérique de la face de cintrage d'une part ainsi qu'entre les bords des deux vitres d'autre part, alors le raccordement entre le générateur de dépression non représenté et le moule de cintrage par aspiration 5 est ouvert, suivant la **figure 4**. L'écoulement d'air d'aspiration qui s'établit à présent est indiqué par une flèche pointant vers l'aval dans le canal d'aspiration 6 du moule de cintrage par aspiration 5. La pression atmosphérique régnant au-dessus de la paire de vitres 2, respectivement la différence de pression créée sur la paire de vitres 2 presse à présent les deux vitres en même temps contre la face de cintrage. Celles-ci acquièrent simultanément une forme spatiale définitive hautement complémentaire. Des traces éventuelles de l'action mécanique du moule supérieur 4 sur la face supérieure de la vitre placée en position supérieure restent très localement limitées à la région du bord extérieur de celle-ci.

Après un court laps de temps prédéterminé, le contact de la face supérieure de la vitre placée en position supérieure avec le moule supérieur 4 est à nouveau rompu comme le montre la **figure 5.** Le moule de cintrage par aspiration 5 est à nouveau abaissé tout en maintenant l'application de la dépression (respectivement le cas échéant le moule supérieur 4 est à nouveau soulevé). On maintient quand même encore, pour une période de temps dépendant de la complexité du contour de cintrage terminé de la paire de vitres 2, la différence de pression sur la paire de vitres 2 (flèche pointant vers l'aval dans le canal d'aspiration 6). On assure ainsi qu'un contact sur toute la surface peut encore être établi entre la face inférieure de la vitre placée en position inférieure et la face de cintrage concave du moule de cintrage par aspiration 5, même après l'enlèvement du moule supérieur.

Dans le cas où l'on renonce, comme cela a été mentionné plus haut, à utiliser le moule supérieur 4 pendant l'étape principale de cintrage, on peut passer directement de la phase de transfert illustrée dans la figure 2 à la phase illustrée dans la figure 5 d'une application limitée dans le temps d'une dépression à la paire de vitres posée librement. Les étapes des figures 3 et 4 pourraient alors être supprimées.

Comme dernière phase du procédé de cintrage proprement dit, on interrompt l'application de la dépression après le laps de temps prévu à cet effet. La paire de vitres 2 cintrée à présent terminée repose d'abord librement en contact de surface sur le moule de cintrage par aspiration 5. Comme le montre la figure 6, elle peut être transférée à partir de celui-ci sur un dispositif de transport 7, qui est amené ici à la place du moule de précintrage 3 précédemment utilisé. Le dispositif de transport 7 a de nouveau la forme d'un cadre, d'une façon connue en soi. Dans le cas optimal, sa surface forme un prolongement continu de la face de cintrage du moule de cintrage par aspiration 5. La face libre qu'il délimite est donc de nouveau au moins aussi grande que le moule de cintrage par aspiration. Lors du transfert de la paire de vitres 2 cintrée terminée mais cependant encore chaude - effectué ici par abaissement du moule de cintrage par aspiration 5 à travers le dispositif de transport - on prévient ainsi une autre déformation imprévue du bord. Posée sur le dispositif de transport 7, la paire de vitres 2 est à présent conduite à un poste de refroidissement non représenté, comme le montre une flèche orientée vers la droite.

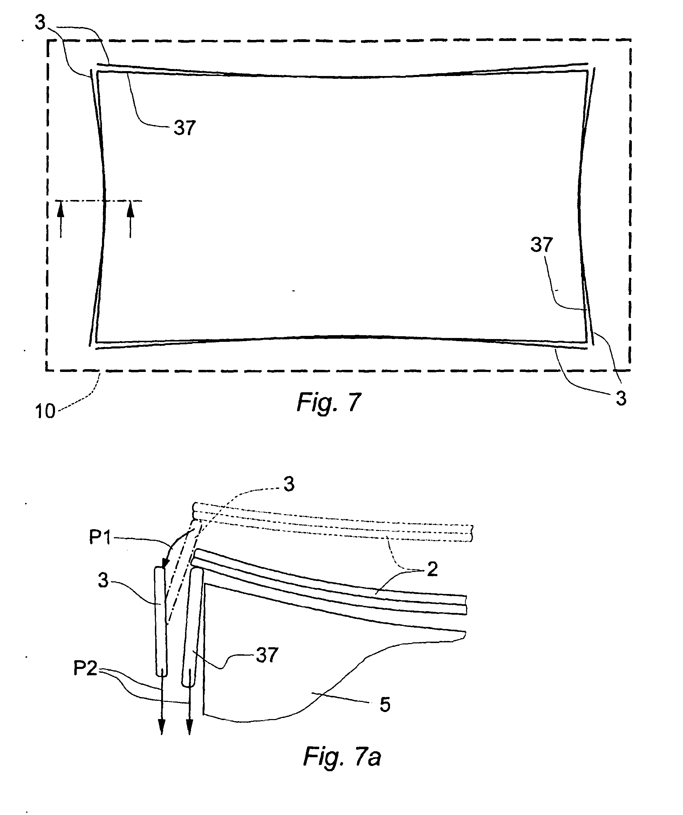

La **figure 7** illustre une variante du dispositif décrit jusqu'ici. En plus du moule de précintrage 3 en forme de cadre, on prévoit maintenant un cadre de cintrage 37 supplémentaire. Les deux moules de cintrage 3 et 37 en forme de cadre forment une unité accouplée mécaniquement (indiquée par un cadre 10), laquelle est également utilisée pour le transport des vitres pendant le traitement de cintrage ainsi que le cas échéant pendant le chauffage et le refroidissement.

Dans l'élévation verticale selon la figure 7, on reconnaît que les faces d'appui - de courbure sphérique - du moule de précintrage 3 en projection verticale avec celles du moule de cintrage 37 se recouvrent sur d'autres parties et ne peuvent être projetées l'une à côté de l'autre que dans les quatre zones des coins. Dans cet exemple, le contour du moule de cintrage 37 dans les zones de coin par rapport au contour du moule de précintrage 3 se trouve nettement plus haut que dans les zones latérales, car les vitres sont en général cintrées relativement fortement sphériquement sur de tels moules (en particulier pour des pare-brise de véhicules). En outre, les retraits visibles les plus gros des vitres s'ajustent précisément dans les coins, lorsque la profondeur du cintrage augmente. On obtient sur le cadre de cintrage 37 un affaissement encore plus profond sous l'effet de la force de gravité.

Le moule de précintrage 3 est ici divisé en quatre segments, un pour chaque arête de vitre. Pour des raisons de clarté uniquement, des espaces relativement larges qui séparent ces segments les uns des autres ont été laissés dans les zones de coin de ce moule. Ceci n'est toutefois pas la seule possibilité et la seule position pour disposer les séparations des segments.

En fait, cette segmentation du moule de précintrage 3 sert à transférer la paire de vitres précintrée du moule de précintrage 3 sur le cadre de précintrage 37 rigide en soi. Ce dernier se trouve en dessous du moule de précintrage tant qu'il porte encore les vitres (dans sa position "active"). Par une opération de désengagement connue en soi, les segments du moule de précintrage 3 sont pivotés ou rabattus vers le bas latéralement (position "passive"). La face inférieure de la vitre en appui est ensuite d'abord mise en contact avec les zones de coin relativement rehaussées du cadre de cintrage 37. Ensuite, la paire de vitres - toujours chauffée à la température de ramollissement - s'affaisse encore davantage sous l'effet de la force de gravité, la face de verre inférieure s'appliquant le long de ses arêtes aussi dans une large mesure contre les faces d'appui du cadre de cintrage 37. Au moins au niveau de ces bords, la paire de vitres 2 a alors essentiellement son contour de cintrage final. Cette opération représente une étape intermédiaire, qui se trouve, temporellement, entre les états illustrés dans les figures 1 et 2. Toutefois essentiellement les mêmes zones de faces de verre viennent en contact avec le cadre de cintrage 37 que celles qui s'appliquaient avant sur le moule de précintrage 3.

On peut prévoir des axes s'étendant horizontalement pour déplacer les segments du moule de précintrage 3, ces axes devant être placés sur le cadre 10 de manière appropriée et connue en soi. On configure le déroulement du mouvement en outre de préférence de telle sorte qu'il se produise un mouvement relatif de glissement aussi faible que possible entre les faces d'appui du moule de précintrage 3 et de la surface de verre reposant dessus.

La direction dans laquelle on regarde la représentation en coupe de la **figure 7a** est indiquée dans la figure 7 avec une ligne en pointillés et deux flèches orientées vers le haut. Ceci explicite encore plus clairement le déroulement déjà mentionné ci-dessus.

Le moule de précintrage 3 ou sa face d'appui se trouve dans la zone coupée du segment individuel visible ici d'abord plus haut - illustré en pointillés - que le cadre de cintrage 37, mais recouvre toutefois ce dernier dans la projection verticale. Egalement en pointillés, on voit le contour de cintrage représenté seulement relativement légèrement précintré de la paire de vitres 2 dans la zone d'appui. Il convient de remarquer que dans cette représentation schématique, les véritables déroulements de cintrage des vitres peuvent tout au plus être illustrés de manière approximative.

Une flèche P1 courbe, tournée vers le bas, indique un mouvement de pivotement, avec lequel le segment concerné du moule de précintrage 3 - simultanément à tous les autres segments - est placé dans une position "passive". La paire de vitres 2 se trouve sur le cadre de cintrage 37 et s'affaisse déjà à un contour de cintrage correspondant approximativement à sa forme spatiale finale après le traitement de cintrage.

Deux flèches P2 parallèles, tournées vers le bas, indiquent l'opération de transfert au moule concave de cintrage par aspiration 5, comme ceci est également indiqué dans la figure 2. On reconnaît ici aussi que la face d'appui du cadre de cintrage 37 se raccorde avec le moins de joint possible à la face de formage du moule de cintrage par aspiration 5. '

Le cadre de cintrage 37 vient ainsi également à la place du dispositif de transport 7 encore illustré dans les figures 5 et 6. Ensuite, les vitres finies cintrées sur le moule de cintrage par aspiration 5 peuvent à nouveau être transférées après l'arrêt de la dépression sur le cadre de cintrage 37 et être acheminées sur celui-ci vers leur refroidissement. Naturellement, le moule de précintrage 3 ou ses segments doivent d'abord être ramenés dans leur position active (indiquée en pointillés dans la figure 7a) avant un nouveau chargement avec une paire de vitres.

Un autre grand avantage de la configuration décrite ici réside dans le fait que le dépassement nécessaire des vitres 2 au-delà de la face de formage du moule de cintrage par aspiration 5 peut être limité à une dimension minimale, de sorte que les irrégularités perceptibles à l'oeil nu puissent ici aussi être minimisées.

En s'écartant des réalisations précédentes, on pourrait envisager de diviser les deux faces d'appui des cadres de cintrage 3 et 37 emboîtés l'un dans l'autre en plusieurs petites faces d'appui ou points d'appui décalés les uns par rapport aux autres, de sorte que toutes deux puissent s'engager complètement l'une dans l'autre à la manière d'un peigne. Ainsi, chaque mouvement relatif de glissement entre les faces d'appui du moule et de la surface du verre pourrait être évité. Les deux cadres de cintrage ne doivent plus être ajustés qu'en hauteur l'un par rapport à l'autre.

## Revendications

1. Procédé pour cintrer par paires des vitres posées l'une sur l'autre, chauffées à leur température de ramollissement, avec les caractéristiques suivantes:
- la paire de vitres (2) est déposée sur un cadre de cintrage (3) et précintrée sous l'action de la force de la gravité;
- la paire de vitres (2) précintrée est transférée directement depuis un cadre de cintrage (3 ; 37) sur un moule de cintrage par aspiration (5) avec une face de formage concave, un appui de la face inférieure de la vitre placée en position inférieure étant réalisé au moins sur le bord périphérique de la face de formage;
- par application d'une dépression pendant un laps de temps déterminé, on aspire l'air hors de l'espace intermédiaire entre la face inférieure de la vitre placée en position inférieure et le moule de cintrage par aspiration (5) et la paire de vitres (2) est pressée par la pression atmosphérique sur la face de formage concave du moule de cintrage par aspiration (5);
- après la fin de l'application de la dépression, la paire de vitres (2) moulée terminée est transférée du moule de cintrage par aspiration (5) directement sur un cadre (7; 37) avec un contour se raccordant en affleurement à la face de formage du moule de cintrage par aspiration et est refroidie.

2. Procédé suivant la revendication 1, dans lequel
- la paire de vitres (2) précintrée est transférée du premier cadre de cintrage (3) sur un autre cadre de cintrage (37) avc un contour correspondant au contour final de cintrage aux bords des vitres et après une autre opération de cintrage sous l'effet de la force de gravité,
- est transférée de l'autre cadre de cintrage (37) au moule de cintrage par aspiration concave (5).

3. Procédé suivant la revendication 2, **caractérisé en ce que** l'on laisse tomber la paire de vitres (2) par pivotement du moule de précintrage (3) divisé en segments sur le cadre de cintrage supplémentaire.

4. Procédé suivant la revendication 2 ou 3, **caractérisé en ce que** l'on met en contact la surface de verre avec les faces d'appui du moule de précintrage d'une part et dû cadre de cintrage supplémentaire d'autre part essentiellement le long des mêmes lignes périphériques.

5. Procédé suivant l'une quelconque des revendications précédentes, **caractérisé en ce que** le bord de la paire de vitres (2) transférée sur le moule de cintrage par aspiration (5) est, avant le commencement de l'application de la dépression, pressé au moins de façon temporaire sur le bord du moule inférieur concave de cintrage par aspiration (5) au moyen d'un moule supérieur (4) complémentaire au moule de cintrage par aspiration, en particulier au moyen d'un moule supérieur en forme de cadre.

6. Procédé suivant la revendication 5, **caractérisé en ce que** le contact entre la face supérieure de la vitre supérieure et le moule supérieur est rompu avant la fin de l'application de la dépression et l'application de la dépression est maintenue pendant un temps déterminé.

7. Procédé suivant l'une quelconque des revendications 1 à 5, dans lequel le cadre de cintrage (3, 37) présentant un plus grand périmètre que le moule de cintrage par aspiration (5) est abaissé vers le moule de cintrage par aspiration (5), la face inférieure de la vitre placée en position inférieure étant ainsi mise en contact avec le moule de cintrage par aspiration (5).

8. Procédé suivant l'une quelconque des revendications 1 à 5, dans lequel le moule de cintrage par aspiration est guidé de bas en haut à travers le cadre de cintrage réalisé avec un plus grand périmètre et est mis en contact avec la face inférieure de la vitre placée en position inférieure.

9. Dispositif pour cintrer par paires des vitres posées l'une sur l'autre chauffées à leur température de ramollissement, en particulier pour mettre en oeuvre le procédé suivant l'une quelconque des revendications de procédé précédentes, lequel dispositif comprend
- un four pour chauffer les vitres,
- au moins un moule de précintrage en forme de cadre (3, 37) destiné à porter la paire de vitres (2) chauffée à sa température de ramollissement,
- un moule de cintrage par aspiration (5) avec une face de formage concave, qui revient légèrement en retrait par rapport à la face de la vitre inférieure, sur laquelle la paire de vitres (2) précintrée est transférée et déposée, le moule de précintrage entourant en forme de cadre le moule de cintrage par aspiration lors du transfert de la paire de vitres,
- des moyens pour produire une dépression limitée dans le temps entre la face de formage concave et la face inférieure de la vitre placée en position inférieure, par laquelle une différence de pression se crée sur la paire de vitres (2) précintrée et celle-ci est pressée contre la face de formage,
- un moule supérieur (4) complémentaire à la face de formage du moule de cintrage par aspiration (5), qui peut être mis en contact au moins avec le bord de la vitre placée en position supérieure de la paire de vitres (2) avant l'application de la dépression au moule de cintrage par aspiration (5),
- un dispositif de transport (37) pour transférer vers un poste de refroidissement la paire de vitres (2) cintrée terminée transférée sur celui-ci depuis le moule de cintrage par aspiration (5).

10. Dispositif suivant la revendication 9, **caractérisé en ce que** le moule de précintrage (3) est combiné à un moule de cintrage en forme de cadre supplémentaire (37), le moule de précintrage (3) étant déplaçable par rapport au moule de cintrage supplémentaire (37) de telle sorte que la paire de vitres précintrée (2) puisse être transférée du moule de précintrage (3) au moule de cintrage supplémentaire (37).

11. Dispositif suivant la revendication 10, **caractérisé en ce que** les faces d'appui du moule de précintrage (3) sont plus élevées dans une position active portant la paire de vitres que les faces d'appui du moule de cintrage supplémentaire (37).

12. Dispositif suivant la revendication 10 ou 11, **caractérisé en ce que** les faces d'appui du moule de précintrage (3), dans une position active portant la paire de vitres recouvrent au moins partiellement les faces d'appui du moule de cintrage supplémentaire (37) dans une projection verticale.

13. Dispositif suivant la revendication 10, 11 ou 12, **caractérisé en ce que** les deux moules de cintrage en forme de cadre viennent en contact avec la surface de verre l'un après l'autre seulement sur une bande marginale étroite d'au plus 10 mm, en particulier de moins de 8 mm de large depuis l'arête de verre.

14. Dispositif suivant l'une quelconque des revendications 10 à 13, **caractérisé en ce que** le moule de précintrage (3) ou ses faces d'appui sont divisés en plusieurs segments, qui sont à chaque fois mobiles, en particulier qui peuvent pivoter, par rapport au moule de cintrage en forme de cadre supplémentaire (37) pendant le transfert de la paire de vitres (2).

15. Dispositif suivant l'une quelconque des revendications 10 à 14, **caractérisé en ce que** le moule de précintrage (3) et le moule de cintrage en forme de cadre supplémentaire (37) sont disposés sur un bâti ou cadre (10) commun et peuvent être déplacés conjointement en vue du transport de la paire de vitres (2).

16. Dispositif selon l'une des revendications 9 à 15, **caractérisé en ce que** le moule supérieur est un cadre de cintrage complémentaire au bord du moule inférieur.

## Claims

1. A method for bending, in pairs, panes placed one upon the other, heated to their softening temperature, with the following characteristics:
- the pair of panes (2) is deposited on a bending frame (3) and prebent under the action of the force of gravity;
- the prebent pair of panes (2) is transferred directly from a bending frame (3; 37) onto a suction bending mold (5) with a concave forming face, the underside of the lowermost pane being supported at least on the peripheral edge of the forming face;
- by applying a depression for a predetermined length of time, the air is sucked out of the intermediate space between the underside of the lowermost pane and the suction bending mold (5), and the pair of panes (2) is pressed by atmospheric pressure onto the concave forming face of the suction bending mold (5);
- after the end of the application of the depression, the finished molded pair of panes (2) is transferred from the suction bending mold (5) directly onto a frame (7; 37) with a contour which comes up flush against the forming face of the suction bending mold and is cooled.

2. The method as claimed in claim 1, in which
- the prebent pair of panes (2) is transferred from the first bending frame (3) onto another bending frame (37) with a contour corresponding to the final bent contour at the edges of the panes and after another bending operation under the effect of the force of gravity,
- is transferred from the other bending frame (37) to the concave suction bending mold (5).

3. The method as claimed in claim 2, **characterized in that** the pair of panes (2) is dropped onto the additional bending frame by pivoting the prebending mold (3) which is split into segments.

4. The method as claimed in claim 2 or 3, **characterized in that** the surface of the glass is brought into contact with the supporting faces of the prebending mold, on the one hand, and of the additional bending frame, on the other hand, essentially along the same peripheral lines.

5. The method as claimed in any of the preceding claims, **characterized in that** the edge of the pair of panes (2) which pair is transferred onto the suction bending mold (5) is, before the depression starts to be applied, pressed at least temporarily onto the edge of the concave lower suction bending mold (5) by means of an upper mold (4) that complements the suction bending mold, particularly by means of an upper mold in the form of a frame.

6. The method as claimed in claim 5, **characterized in that** the contact between the upper face of the upper pane and the upper mold is broken before the end of application of the depression and the application of the depression is maintained for a determined length of time.

7. The method as claimed in any of claims 1 to 5, in which the bending frame (3, 37) having a larger perimeter than the suction bending mold (5) is lowered toward the suction bending mold (5), the underside of the lowermost pane thus being brought into contact with the suction bending mold (5).

8. The method as claimed in any of claims 1 to 5, in which the suction bending mold is guided upward through the bending frame produced with a larger perimeter and is brought into contact with the underside of the lowermost pane.

9. A device for bending, in pairs, panes placed one upon the other and heated to their softening temperature, particularly for implementing the method as claimed in any of the preceding method claims, which device comprises
- a furnace for heating the panes,
- at least one prebending mold in the form of a frame (3, 37) intended to carry the heated pair of panes (2) to its softening temperature,
- a suction bending mold (5) with a concave forming face, which is set back slightly with respect to the face of the lowermost pane, onto which the prebent pair of panes (2) is transferred and deposited, the prebending mold surrounding, in the form of a frame, the suction bending mold when the pair of panes is being transferred,
- means for producing a depression which is limited over time between the concave forming face and the underside of the lowermost pane, by which depression a pressure difference is created across the prebent pair of panes (2), and this pair is pressed against the forming face,
- an upper mold (4) that complements the forming face of the suction bending mold (5), which can be brought into contact at least with the edge of the uppermost pane of the pair of panes (2) before the depression is applied to the suction bending mold (5),
- a transport device (37) for transferring the finished bent pair of panes (2) to a cooling station, which pair is transferred to it from the suction bending mold (5).

10. The device as claimed in claim 9, **characterized in that** the prebending mold (3) is combined with an additional bending mold in the form of a frame (37), the prebending mold (3) being movable with respect to the additional bending mold (37) so that the prebent pair of panes (2) can be transferred from the prebending mold (3) to the additional bending mold (37).

11. The device as claimed in claim 10, **characterized in that** the support faces of the prebending mold (3) are higher in an active position carrying the pair of panes than the support faces of the additional bending mold (37).

12. The device as claimed in claim 10 or 11, **characterized in that** the support faces of the prebending mold (3), in an active position carrying the pair of panes, cover at least partially the support faces of the additional bending mold (37) in vertical projection.

13. The device as claimed in claim 10, 11 or 12, **characterized in that** the two bending molds in the form of frames come into contact with the surface of the glass one after the other only over a narrow marginal strip at most 10 mm wide, particularly less than 8 mm wide, measured from the edge of the glass.

14. The device as claimed in any of claims 10 to 13, **characterized in that** the prebending mold (3) or its support faces are split into several segments each of which is movable, particularly which can pivot, with respect to the additional bending mold in the form of a frame (37) while the pair of panes (2) is being transferred.

15. The device as claimed in any of claims 10 to 14, **characterized in that** the prebending mold (3) and the additional bending mold in the form of a frame (37) are arranged on a common fixture or frame (10) and can be moved jointly with a view to transporting the pair of panes (2).

16. The device as claimed in any of claims 9 to 15, **characterized in that** the upper mold is a bending frame that complements the edges of the lower mold.

## Patentansprüche

1. Verfahren zum paarweisen Biegen von auf ihre Erweichungstemperatur erhitzten, aufeinander liegenden Glasscheiben mit folgenden Merkmalen :
- das Glasscheibenpaar (2) wird auf eine Rahmenbiegeform (3) abgelegt und unter Schwerkraftwirkung vorgebogen;
- das vorgebogene Glasscheibenpaar (2) wird direkt von der Rahmenbiegeform (3; 37) auf eine Saugbiegeform (5) mit konkaver Formfläche übergeben, wobei eine Anlage der Unterseite der unten liegenden Glasscheibe zumindest an den Umfangsrand der Formfläche hergestellt wird;
- durch Anlegen eines Unterdrucks während einer bestimmten Zeitspanne wird Luft aus dem Zwischenraum zwischen der Unterseite der unten liegenden Glasscheibe und der Saugbiegeform (5) abgesaugt und das Glasscheibenpaar (2) durch den Umgebungsdruck auf die konkave Formfläche der Saugbiegeform (5) gedrückt;
- nach Ende der Unterdruckbeaufschlagung wird das fertig geformte Glasscheibenpaar (2) von der Saugbiegeform (5) unmittelbar auf eine Transportvorrichtung (7, 37) mit einer sich bündig an die Formfläche der unteren Saugbiegeform anschließenden Kontur übergeben und abgekühlt.

2. Verfahren nach Anspruch 1, bei dem:
- das vorgebogene Glasscheibenpaar (2) von der ersten Rahmenbiegeform (3) auf eine weitere Rahmenbiegeform (37) mit einer der endgültigen Randbiegekontur der Glasscheiben entsprechenden Kontur übergeben wird und nach einem weiteren Schwerkraft-Biegevorgang
- von der weiteren Rahmenbiegeform (37) auf die konkave Saugbiegeform (5) übergeben wird.

3. Verfahren nach Anspruch 2, **dadurch gekennzeichnet, dass** man das Glasscheibenpaar (2) durch Wegschwenken der in Segmente unterteilten Vorbiegeform (3) auf die weitere Rahmenbiegeform fallen lässt.

4. Verfahren nach Anspruch 2 oder 3, **dadurch gekennzeichnet, dass** man die Glasoberfläche mit den Auflageflächen der Vorbiegeform einerseits und der weiteren Rahmenbiegeform andererseits im wesentlichen entlang denselben Umfangslinien in Kontakt bringt.

5. Verfahren nach einem der vorstehenden Ansprüche, **dadurch gekennzeichnet, dass** der Rand des auf die Saugbiegeform (5) übergebenen Glasscheibenpaars (2) vor Beginn der Unterdruckbeaufschlagung mittels einer zur Saugbiegeform komplementären Oberform (4), insbesondere mittels einer rahmenförmigen Oberform, wenigstens vorübergehend an den Rand der unteren konkaven Saugbiegeform (5) angedrückt wird.

6. Verfahren nach Anspruch 5, **dadurch gekennzeichnet, dass** vor dem Ende der Unterdruckbeaufschlagung der Kontakt zwischen der Oberseite der oberen Glasscheibe und der Oberform aufgehoben und die Unterdruckbeaufschlagung für eine bestimmte Zeit beibehalten wird.

7. Verfahren nach einem der vorstehenden Ansprüche 1 bis 5, bei dem die einen größeren Umfang als die Saugbiegeform (5) aufweisende Rahmenbiegeform (3, 37) zu der Saugbiegeform (5) abgesenkt wird, wobei die Unterseite der unten liegenden Glasscheibe in Kontakt mit der Saugbiegeform (5) gebracht wird.

8. Verfahren nach einem der vorstehenden Ansprüche 1 bis 5, bei dem die Saugbiegeform von unten nach oben durch die mit größerem Umfang ausgeführte Rahmenbiegeform geführt und in Kontakt mit der Unterseite der unten liegenden Glasscheibe gebracht wird.

9. Vorrichtung zum paarweisen Biegen von aufeinanderliegenden, auf ihre Erweichungstemperatur erhitzten Glasscheiben, insbesondere zum Durchführen des Verfahrens nach einem der vorstehenden Verfahrensansprüche, welche Vorrichtung umfasst
- einen Ofen zum Erhitzen der Glasscheiben,
- mindestens eine rahmenförmige Vorbiegeform (3, 37) zum Tragen des auf seine Erweichungstemperatur erhitzten Glasscheibenpaars (2),
- eine Saugbiegeform (5) mit konkaver Formfläche, die geringfügig gegenüber der Fläche der unten liegenden Glasscheibe zurückspringt, auf welche das vorgebogene Glasscheibenpaar (2) übergeben und aufgelegt wird, wobei die Vorbiegeform die Saugbiegeform bei der Übergabe des Glasscheibenpaars rahmenförmig umfasst,
- Mittel zum Erzeugen eines zeitlich begrenzten Unterdrucks zwischen der konkaven Formfläche und der Unterseite der unten liegenden Glasscheibe, wodurch eine Druckdifferenz über das vorgebogene Glasscheibenpaar (2) aufgebaut und dieses gegen die Formfläche gedrückt wird,
- eine Transportvorrichtung (37) zum Überführen des auf sie von der Saugbiegeform (5) übergebenen fertig gebogenen Glasscheibenpaars (2) in eine Kühlstation.

10. Vorrichtung nach Anspruch 9, **dadurch gekennzeichnet, dass** die Vorbiegeform (3) mit einer weiteren rahmenförmigen Biegeform (37) kombiniert ist, wobei die Vorbiegeform (3) so gegenüber der weiteren Biegeform (37) beweglich ist, dass das vorgebogene Glasscheibenpaar (2) von der Vorbiegeform (3) auf die weitere Biegeform (37) übergebbar ist.

11. Vorrichtung nach Anspruch 10, **dadurch gekennzeichnet, dass** die Auflageflächen der Vorbiegeform (3) in einer aktiven, das Glasscheibenpaar tragenden Stellung höher liegen als die Auflageflächen der weiteren Biegeform (37).

12. Vorrichtung nach Anspruch 10 oder 11, **dadurch gekennzeichnet, dass** die Auflageflächen der Vorbiegeform (3) in einer aktiven, das Glasscheibenpaar tragenden Stellung als die Auflageflächen der weiteren Biegeform (37) in einer vertikalen Projektion wenigstens teilweise überdecken.

13. Vorrichtung nach Anspruch 10, 11 oder 12, **dadurch gekennzeichnet, dass** beide rahmenförmige Biegeformen mit der Glasoberfläche nacheinander nur in einem schmalen Randstreifen von höchstens 10 mm, insbesondere weniger als 8 mm Breite von der Glaskante entfernt in Berührung kommen.

14. Vorrichtung nach einem der Ansprüche 10 bis 13, **dadurch gekennzeichnet, dass** die Vorbiegeform (3) oder deren Auflageflächen in mehrere Segmente unterteilt sind, welche jeweils gegenüber der weiteren rahmenförmigen Biegeform (37) während der Übergabe des Glasscheibenpaars (2) beweglich, insbesondere schwenkbar sind.

15. Vorrichtung nach einem der Ansprüche 10 bis 14, **dadurch gekennzeichnet, dass** die Vorbiegeform (3) und die weitere rahmenförmige Biegeform (37) auf einem gemeinsamen Gestell oder Rahmen (10) angeordnet und zum Transport des Glasscheibenpaars (2) gemeinsam verfahrbar sind.

16. Vorrichtung nach einem der Ansprüche 9 bis 15, **dadurch gekennzeichnet, dass** die obere Form ein komplementärer Vorspannungsrahmen zum Rand der unteren Form ist.
